# EUROPÄISCHE PATENTSCHRIFT

(11) **EP 2 095 945 B1**
(45) Veröffentlichungstag und Bekanntmachung des Hinweises auf die Patenterteilung: **09.10.2013**
(21) Anmeldenummer: 09002837.4
(22) Anmeldetag: 27.02.2009
(51) Int. Cl.: B32B 38/00, B32B 37/00, B26D 1/08

(54) **Vorrichtung zum Trennen von Laminat**
Apparatus for separating laminate
Appareil de séparation d'un laminé

(30) Priorität: 28.02.2008 DE 102008011544
(43) Veröffentlichungstag der Anmeldung: 02.09.2009
(73) Patentinhaber: Steinemann Technology AG, 9015 St. Gallen (CH)
(72) Erfinder: Stibi, Reto, 8595 Altnau (CH)
(74) Vertreter: Arat, Dogan

(56) Entgegenhaltungen:
- WO-A-01/76832
- DE-C1- 10 123 521
- GB-A- 2 389 559
- US-A- 4 680 079
- US-A1- 2002 074 090
- US-B1- 6 521 076

## Beschreibung

Die Erfindung betrifft eine Vorrichtung zum Trennen von Laminat, bestehend aus einer bahnförmigen Folie und Einzelbögen, wobei das vorgängig kaschierte Laminat an einer Schneidstation vorbeigeführt wird. Die Erfindung betrifft weiterhin eine Vorrichtung zum Trennen von solchem Laminat. In diesem Zusammenhang wird auf die DE 10123521 C1 hingewiesen

Eine relativ dünne und "endlose" Folie aus einem Kunststoffmaterial wird mit einem Bogen einer Laminiereinheit mit gegendruckbeaufschlagtem Walzenpaar zugeführt und im Walzenspalt laminiert. Die Haftung zwischen Bogen und Folie kann durch verschiedene Verfahrensvarianten herbeigeführt werden (z. B. Dispersions-, Thermo-, SF- oder UV Kleber). Üblicherweise werden die einzelnen, aufeinander folgenden Bogen unterlappt den Walzen zugeführt, um das Verkleben der Folie auf der Gegendruckwalze zu verhindern.

Vor der Weiterverarbeitung in einem nachgeordneten Prozess muss das Laminat wiederum zu einzelnen Bogen vereinzelt werden, da die Bögen durch die Folie miteinander verbunden sind.

Die Trennung erfolgt zum Beispiel mittels eines rotierenden Messers. So beschreibt die EP-B-706863 eine Vorrichtung zum Trennen von Laminat mit einem, mit der Geschwindigkeit des Laminates mitbewegbaren Schneidmesser, das als thermisches Schneidmesser ausgebildet ist, dessen Umlaufgeschwindigkeit computergesteuert ist.

Das Laminat wird hierbei auf einem Tischblech der Schneidstation zugeführt. In der DE-A-10028070 ist ein ebenes Tischblech offenbart, das Ausnehmungen für optische Sensoren enthält. Ermöglicht werden soll eine formatgesteuerte Kontrolle der Bogenvorderkante. Ein Anlegetisch gemäss der DE-A-10355459 soll eine sichere Führung von Bögen vom Anlegetisch zu einem Übergabezylinder ermöglichen, weshalb eine Tischblechoberseite konzentrisch um einen Gestellpunkt eines rotierenden Vorgreifers ge führt ist und geringfügig unterhalb eines Flugkreises der Greiferaufschlagleisten verläuft.

Bei einem Verfahren zum Kaschieren und Trennen eines Laminates gemäss EP-B-1282510 werden Einzelbögen der Kaschierstation zugeführt und das Laminat wird an einer Schneidstation vorbeigeführt. Hierbei werden die Trennstellen noch vor der Kaschierung laufend durch einen Kantensensor an der oberen Hinterkante der Bögen detektiert. Die Schneidfunktion wird auf der Grundlage der detektierten Kantensignale eingeleitet. Eine ähnliche Vorrichtung wird in der WO 01/76832 A1 offenbart.

Des weiteren zeigt die US 2002/0074090 A1 eine Vorrichtung zum Laminieren und ein Verfahren zur Herstellung von laminierten Artikeln. Diese Vorrichtung ist bevorzugt zum Laminieren von Postern vorgesehen. Um sicherzustellen, dass die Poster gerade liegen, weist die Vorrichtung zwei Sensoren auf, die die seitlichen Kanten des zulaminierenden Posters detektieren können.

Bekannt ist auch eine Folienkaschiermaschine, bei der Kaschier- und Schneideinheit voneinander getrennt sind und eine Bogenhinterkante nach dem Kaschieren detektiert werden sollte. Eine zuverlässige Hinterkantendektektion konnte jedoch nicht erreicht werden.

Durch die Anordnung nur eines Sensors und Erfassung nur eines Positionswertes ist eine präzise Bogentrennung nicht in jedem Fall gewährleistet.

Zum Trennen sind folgende Verfahren bekannt:

### 1. Mechanische Trennverfahren

1.1 Querschneider
   Ein Trennmesser wird quer/schräg zum Bogenlauf entlang der Bogenhinterkante geführt und durchtrennt dabei die Folie an der Bogenhinterkante. Diese Art der Bogentrennung eignet sich jedoch nicht für hohe Produktionsleistungen.
1.2 Folie einseitig an der Bogenhinterkante anschneiden oder im Unterlappungsbereich aufreiben (einseitig im Randbereich der Unterlappung) und anschliessend mit einer Reisswalze trennen.
1.3 Folie einseitig im Randbereich mittels Perforationsrad perforieren und anschliessend mit einer Reisswalze trennen

Die mechanischen Trennverfahren sind einfach, zuverlässig und trennen die Folie entlang der Bogenhinterkante. Der Schneid- bzw. Reisszyklus wird vorwiegend mittels Bogenvorderkantenabtastung ausgelöst.
Mit den mechanischen Trennverfahren können u.a. Polyesterfolien nicht getrennt werden.

### 2.Thermische Trennverfahren

Die Laminatbahn wird an einem rotierenden Heisstrennmesser vorbeigeführt. Das Heisstrennmesser schmilzt die Folie entlang der Bogenhinterkante, wobei der Trennzeitpunkt über die Bogenhinterkanten oder die Bogenvorderkantendetektion ausgelöst wird. Das rotierende Heisstrennmesser läuft im Trennbereich in etwa mit derselben Geschwindigkeit wie das zu trennende Laminat.

Die Anordnung nur eines Sensors und Erfassung nur eines Positionswertes setzt eine exakte Bogenausrichtung sowie genau zugeschnittene Bogen voraus. Zudem dürfen sich die Bogen nach dem Ausrichten bis zur Laminierstation in ihrer Lage nicht mehr verändern (Bogentransport). Mit dem thermischen Trennverfahren können alle gängigen Folien getrennt werden.

Damit die nachfolgende Bogenvereinzelung störungsfrei funktioniert, ist eine exakte Trennung entlang der Bogenhinterkante notwendig. Zudem können überstehende Folien im Bogenstapel Probleme bei der Weiterverarbeitung zur Folge haben.

Der Erfindung liegt die Aufgabe zugrunde, die Nachteile des Standes der Technik zu meiden und eine Vorrichtung zum Trennen von Laminat, bestehend aus einer bahnförmigen Folie und Einzelbögen, wobei das vorgängig kaschierte Laminat an einer Schneidstation vorbeigeführt wird zu entwickeln.

Die Aufgabe ist mit den Merkmalen des Patentanspruchs 1 gelöst.

Einzelbögen werden unterschuppt einer Kaschierstation zugeführt und das Laminat gelangt nachfolgend in eine Schneidstation, wo der Schneidvorgang bevorzugt mittels eines rotierenden Heisstrennmessers der Anmelderin erfolgt. Die Trennposition der einzelnen Bogen werden vor oder nach dem Kaschieren erfasst. Die Erfassung der Bogenhinterkante erfolgt mit einer Zwei-Positionenmessung.

So erfolgt die Zwei-Positionenmessung der Bogenhinterkante bevorzugt im linken und rechten Randbereich eines Bogens (ein Sensor auf jeder Seite), mit zwei Sensor, und es ist eine Korrektur von Schnittlänge und Messerachse möglich.

Ungenauigkeiten bei der Bogenzuführung sind somit besser erfassbar, unabhängig davon, ob die Bögen schräg, versetzt oder mit seitlichen Abweichungen zugeführt werden. Erreichbar ist eine Trenngenauigkeit gegenüber der Bogenhinterkante von weniger als 0,5 mm, was die Prozesssicherheit deutlich erhöht. Stau oder Produktionsunterbrechungen werden deutlich reduziert.

Bevorzugte Ausführungsformen sind im Unteranspruch offenbart.

Die Erfindung wird nachfolgend in einem Ausführungsbeispiel anhand einer Zeichnung näher beschrieben. In der Zeichnung zeigen die
- Fig. 1:: eine Schneidstation zum Trennen der Bögen
- Fig. 2:: die Schneidstation in einer zweiten Ansicht

In einer nicht explizit dargestellten Laminiermaschine wird im Einlaufbereich ein Laminat 3, bestehend aus einer Kunststofffolie 1 und einem Bogen 2 in bekannter Weise von einer Laminierstation Stoss an Stoss oder unterschuppt kontinuierlich einer Schneidstation 4 mit einem rotierenden Heisstrennmesser 5 zugeführt.

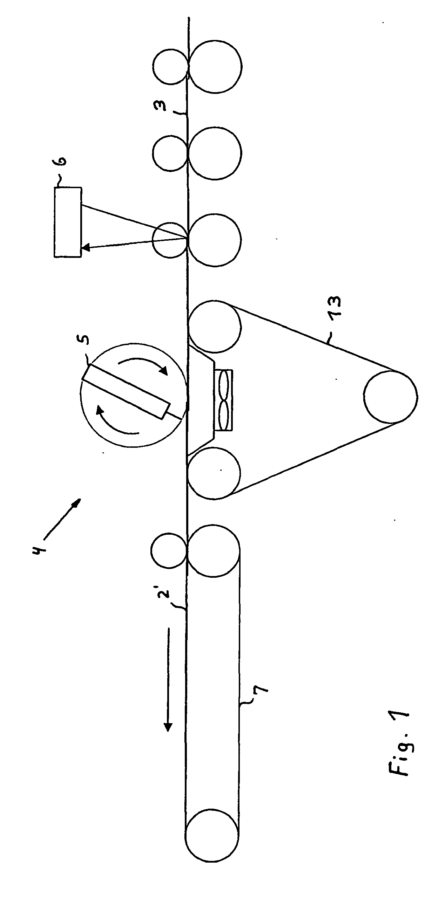

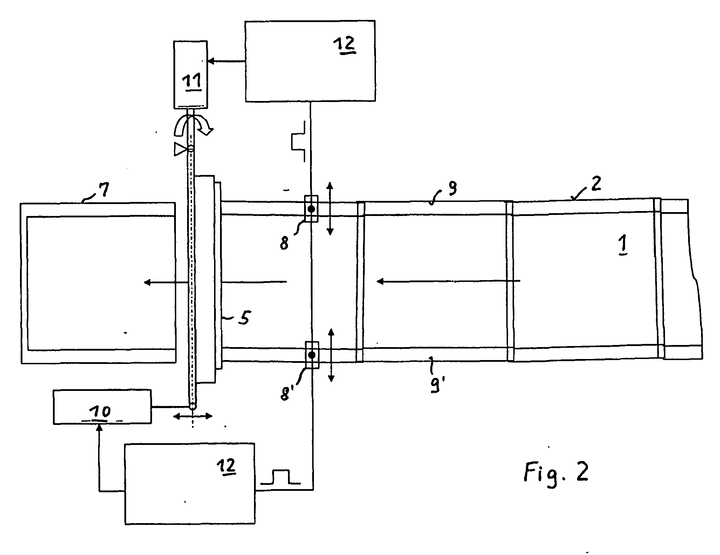

In Transportrichtung (Pfeilrichtung in Fig. 1 und 2) sind vor dem rotierenden Heisstrennmesser 5 und Vakuumbogentransport zwei geeignete Sensoren 6 zur Detektion der oberen, äusseren Bogenhinterkanten (Messeinrichtung 8,8') im Randbereich (9,9') eines Bogens 2 angeordnet. Die Sensoren 6 sind quer zur Transportrichtung motorisch verstellbar. Zeilensensoren tasten die seitlichen Bogenkanten links und rechts ab. Mit der seitlichen Bogenkantenabtastung werden die Sensoren 6 seitlich zur Bogenkante positioniert. Somit ist gewährleistet, dass die Messstellen 8,8' (Sensoren) im Randbereich (9,9') angeordnet sind.

Die Sensoren 6 können unabhängig von einander verfahren werden. Korrekturen erfolgen ausgehend von einem definierten Grundwert.

In Fig. 2 sind mögliche Lageabweichungen von Bögen dargestellt. Die Zeilensensoren sind im Bereich der Sensoren 6 angeordnet.

Die Sensoren 6 sind quer zur Transportrichtung in einem Abstand zum rotierenden Heisstrennmesser angeordnet, der bevorzugt kleiner ist als das minimal verarbeitbare Bogenformat (minimale Bogenlänge I).

Niederhalterollen halten die Bogenbahn im Bereich der Messstelle ruhig.

Das Heisstrennmesser 5 ist mit einer motorisch betriebenen Stelleinheit 10 zur Achskorrektur (Lagekorrektur) sowie einer solchen Stelleinheit 11 zur Korrektur der Schnittlänge (Längenkorrektur) versehen.

Die Stelleinheiten 10, 11 sind jeweils über eine Steuereinheit 12 mit der Messeinrichtung 8, 8' verbunden, so dass Abweichungen der Bogenposition für den Schneidvorgang berücksichtigt werden können. Mit der Zweipunktmessung werden Hinterkanten erfasst, die Hinterkantenposition wird erkannt und es kann eine Ausrichtung von Hinterkanten erfolgen.

Die Messwerte der Zwei-Positionenmessung sind dabei die Basis einer automatisierten Messerverstellung. Unter dem Heisstrennmesser 5 ist ein Vakuum-Transportband 13 für einen lagestabilen Bogentransport angeordnet.

Die getrennten Bögen 2' gelangen auf ein Transportband mit Bogenvereinzelung 7 zur weiteren Handhabung.

Somit können alle gängigen Folien bei allen gängigen Laminierverfahren (Kleberarten) getrennt werden und es sind Abweichungen von einem Sollmass von weniger als 0,5 mm erreichbar.

### Bezugszeichen

- 1: Kunststofffolie
- 2: Bogen
- 2': Bogen
- 3: Laminat
- 4: Schneidstation
- 5: Heisstrennmesser
- 6: Sensor
- 7: TransportbandmitBogenvereinzelung
- 8: Bogenhinterkantenmesseinrichtung
- 8': Bogenhinterkantenmesseinrichtung
- 9: Randbereich
- 9': Randbereich
- 10: Stelleinheit
- 11: Stelleinheit
- 12: Steuereinheit
- 13: TransportbandTrennstation

- I: minimaleBogenlänge

## Patentansprüche

1. Vorrichtung zum Trennen von Laminat (3), zumindest umfassend eine Kaschierstation und einer Schneidstation (4), wobei die Vorrichtung vor der Schneidstation (4) Kantensensoren (6) zur Detektion der oberen Hinterkante des Bogens aufweist und die Schneidfunktion auf der Basis detektierter Kantensignale eingeleitet wird,
**dadurch gekennzeichnet,**
**dass** die Vorrichtung zwei Sensoren (6) zur Detektion der oberen Hinterkante umfasst, wobei je ein Sensor (6) pro Messkopf auf die Hinterkante im linken bzw. rechten Randbereich des Bogens (2) ausgerichtet ist, wobei die Schneidstation (4) mit einem rotierenden Heisstrennmesser (5) versehen ist, wobei das Heisstrennmesser (5) mit motorischen Stelleinheiten für Achskorrektur und Schnittlänge versehen ist, wobei Sensoren (6) quer zur Transportrichtung motorisch verstellbar angeordnet sind.

2. Vorrichtung nach Anspruch 1, **dadurch gekennzeichnet, dass** die Sensoren (6) in Transportrichtung in einem Abstand zum rotierenden Heisstrennmesser (5) angeordnet sind, der kleiner ist als das verarbeitbare Bogenformat Bogenlänge.

## Claims

1. A device for separating laminate (3), at least comprising a laminating station and a cutting station (4), wherein ahead of the cutting station (4), the device has edge sensors (6) to detect the upper rear edge of the sheet and the cutting function is initiated on the basis of detected edge signals, **characterised in that** the device comprises two sensors (6) to detect the upper rear edge, wherein one sensor (6) per measuring head is focused on the rear edge in the left-hand or right-hand edge region of the sheet (2) as the case may be, wherein the cutting station (4) is provided with a rotating hot separating knife (5), wherein the hot separating knife (5) is provided with motor-driven adjustment units for axial correction and cutting length, wherein sensors (6) are arranged so as to be adjustable in a motor-driven manner transversely to the transport direction.

2. A device according to claim 1, **characterised in that** the sensors (6) are arranged at a distance from the rotating hot separating knife (5) in the transport direction, which distance is smaller than the workable sheet format sheet length.

## Revendications

1. Dispositif de séparation d'un laminé (3), comportant au moins un poste de stratification et un poste de découpe (4), le dispositif présentant, avant le poste de découpe (4), des capteurs de bord (6) destinés à détecter le bord arrière supérieur de la feuille et la fonction de découpe étant introduite sur base des signaux de bord détectés,
**caractérisé par le fait que**
le dispositif comporte deux capteurs (6) destinés à détecter le bord arrière supérieur, un capteur (6) par tête de mesure étant orienté vers le bord arrière dans la zone de bord gauche ou droite de la feuille (2), le poste de découpe (4) étant pourvu d'une lame de séparation à chaud rotative (5), la lame de séparation à chaud (5) étant munie d'unités de réglage motorisées pour la correction d'axe et de la longueur de découpe, les capteurs (6) étant disposés déplaçables par moteur transversalement à la direction de transport.

2. Dispositif selon la revendication 1, **caractérisé par le fait que** les capteurs (6) sont disposés à une distance dans la direction de transport par rapport à la lame de séparation à chaud (5) qui est plus petite que le format de feuille - longueur de feuille - pouvant être traité.
